# EUROPEAN PATENT SPECIFICATION

(11) **EP 4 372 524 B1**
(45) Date of publication and mention of the grant of the patent: **08.10.2025**
(21) Application number: 23762129.7
(22) Date of filing: 04.08.2023
(51) Int. Cl.: G06F 1/16, H04R 1/28, H04R 1/02

(54) **ELECTRONIC DEVICE COMPRISING RESONANCE SPACE OF SPEAKER**
ELEKTRONISCHE VORRICHTUNG MIT RESONANZRAUM EINES LAUTSPRECHERS
DISPOSITIF ÉLECTRONIQUE COMPRENANT UN ESPACE DE RÉSONANCE DE HAUT-PARLEUR

(30) Priority: 27.09.2022 KR 20220122891; 19.10.2022 KR 20220135288
(43) Date of publication of application: 22.05.2024
(73) Proprietor: Samsung Electronics Co., Ltd., Suwon-si, Gyeonggi-do 16677 (KR)
(72) Inventor: YUN, Cheongno, Suwon-si, Gyeonggi-do 16677 (KR); KIM, Namki, Suwon-si, Gyeonggi-do 16677 (KR); PARK, Yongseok, Suwon-si, Gyeonggi-do 16677 (KR); OH, Seulki, Suwon-si, Gyeonggi-do 16677 (KR)
(74) Representative: Gulde & Partner
(86) International application number: PCT/KR2023/011537
(87) International publication number: WO 2024/071645

(56) References cited:
- KR-A- 20180 103 829
- KR-A- 20190 062 902
- KR-A- 20220 069 367
- KR-B1- 101 690 524
- US-A1- 2020 329 303
- US-A1- 2021 235 185
- US-A1- 2022 167 079

## Description

### [Technical Field]

The present disclosure relates to an electronic device including a resonance space of a speaker.

### [Background Art]

An electronic device may include a speaker for providing an auditory signal (e.g., an audio signal) to a user. The audio signal may be transmitted to the outside of the housing through a speaker disposed inside the electronic device.

The electronic device including the speaker may include a resonance space for a low-pitched audio signal having a relatively low frequency. In order to secure audio performance of the speaker, a relatively large resonance space may be required for the electronic device.

### [Disclosure]

### [Technical Solution]

The matter for which protection is sought is defined in the appended claims.

According to an unclaimed aspect, an electronic device comprises a housing including a first plate forming a first surface, a second plate forming a second surface opposite to the first surface, and a frame disposed between the first surface and the second surface and forming a side surface, a speaker including a surface partially contacted on a part of the frame and another surface opposite to the surface, a spacer disposed between the other surface and the second surface, and a metal plate disposed on the spacer and in contact with the second plate. According to an embodiment, the spacer includes a planar portion in contact with the other surface of the speaker and spaced apart from the metal plate, a horizontal portion in contact with the metal plate and spaced apart from the other surface of the speaker, and a stepped portion between the planar portion and the horizontal portion. According to an embodiment, when viewing the second surface from above, the planar portion faces the horizontal portion with the stepped portion therebetween. According to an embodiment, the first space between the second surface and the planar portion is connected to the second space between the other surface and the horizontal portion for a resonance space for audio signal transmitted toward a speaker hole of the side surface through a through hole of the frame arranged with respect to the surface of the speaker, from the surface of the speaker.

### [Description of the Drawings]

FIG. 1 is a block diagram of an electronic device in a network environment according to various embodiments.
FIG. 2 is a diagram illustrating an electronic device according to an embodiment.
FIG. 3 is an exploded perspective view of an electronic device according to an embodiment.
FIG. 4a is an exploded perspective view of a region of an electronic device including a speaker according to an embodiment.
FIG. 4b is an exploded perspective view of an exemplary speaker.
FIG. 5 is a schematic cross-sectional view obtained by cutting a region including a speaker according to an embodiment.
FIG. 6 is a perspective view of a spacer according to an embodiment.
FIG. 7A is a cross-sectional view obtained by cutting a region including a spacer of an exemplary speaker according to an embodiment.
FIG. 7B is a cross-sectional view obtained by cutting a region including an illustratively extended spacer according to an embodiment.
FIG. 8 is a cross-sectional view obtained by cutting a region including an exemplary bracket disposed between a spacer and a rear plate according to an embodiment.
FIG. 9 is a perspective view illustrating an exemplary coupling structure of a bracket and a spacer according to an embodiment.
FIG. 10 is a graph illustrating a sound pressure level according to a volume of a resonance space of a speaker, according to an embodiment.

### [Mode for Invention]

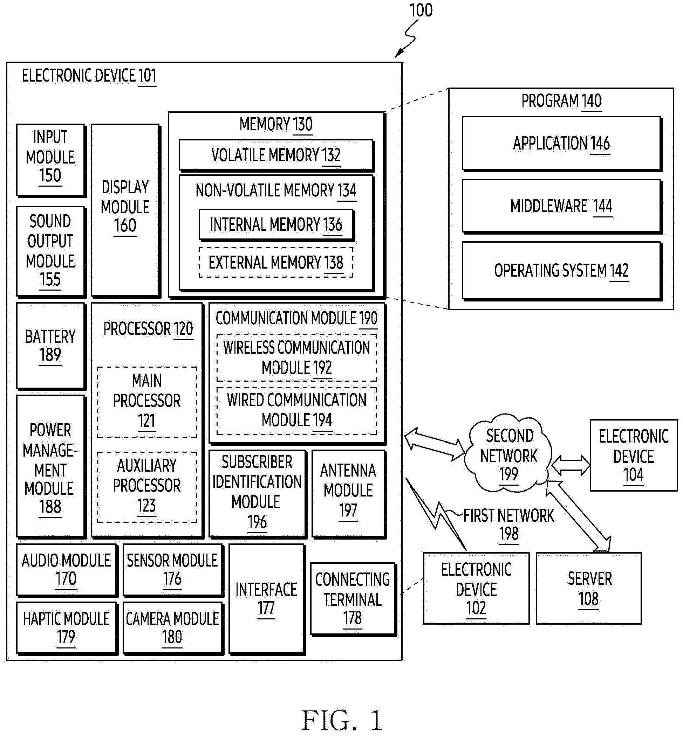

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

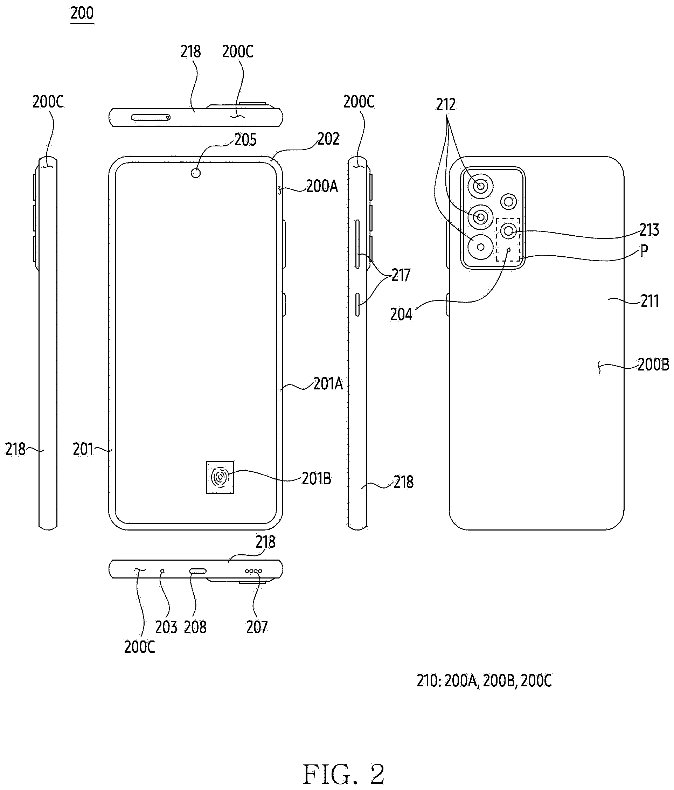

FIG. 2 is a diagram illustrating an electronic device according to an embodiment.

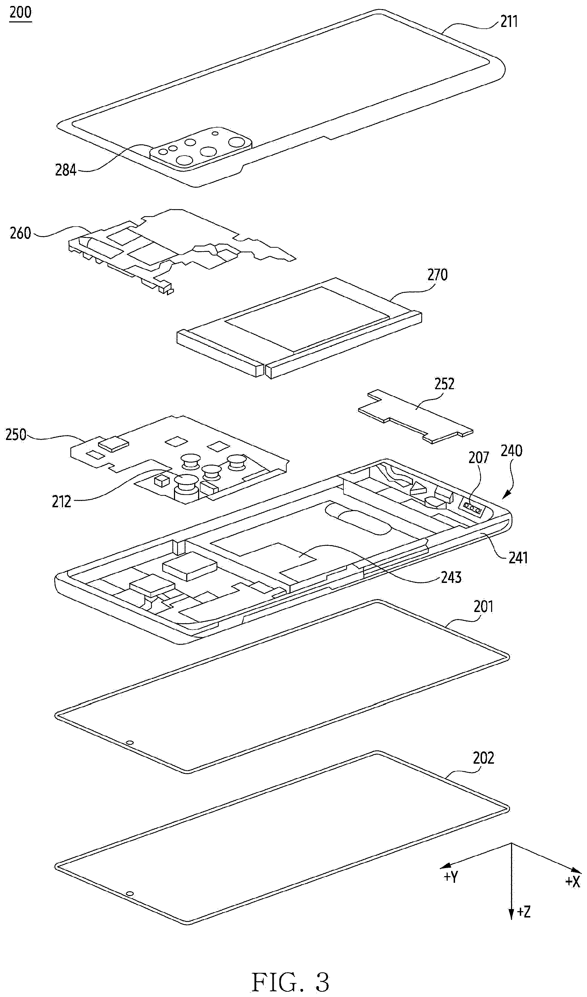

Referring to FIG. 2, an electronic device 200 (e.g., an electronic device 101 of FIG. 1) according to an embodiment may include a housing 210 forming an exterior of the electronic device 200. For example, the housing 210 may include a first surface (or a front surface) 200A, a second surface (or a rear surface) 200B, and a third surface (or a side surface) 200C surrounding a space between the first surface 200A and the second surface 200B. In an embodiment, the housing 210 may refer to a structure (e.g., a frame structure 240 of FIG. 3, also referred to as a structure of a frame 240) forming at least a portion of the first surface 200A, the second surface 200B, and/or the third surface 200C.

The electronic device 200 according to an embodiment may include a substantially transparent front plate 202. In an embodiment, the front plate 202 may form at least a portion of the first surface 200A. In an embodiment, the front plate 202 may include, for example, a glass plate including various coating layers or a polymer plate, but is not limited thereto.

The electronic device 200 according to an embodiment may include a substantially opaque rear plate 211. In an embodiment, the rear plate 211 may form at least a portion of the second surface 200B. In an embodiment, the rear plate 211 may be formed of coated or colored glass, ceramic, polymer, metal (e.g., aluminum, stainless steel (STS), or magnesium), or a combination of at least two of the above materials.

The electronic device 200 according to an embodiment may include a side bezel structure (or side member) 218 (e.g., a side wall 241 of a frame structure 240 of FIG. 3). In an embodiment, the side bezel structure 218 may be coupled to the front plate 202 and/or the rear plate 211 to form at least a portion of the third surface 200C of the electronic device 200. For example, the side bezel structure 218 may form all of the third surface 200C of the electronic device 200, and for another example, the side bezel structure 218 may form the third surface 200C of the electronic device 200 together with the front plate 202 and/or the rear plate 211.

Unlike the illustrated embodiment, when the third surface 200C of the electronic device 200 is partially formed by the front plate 202 and/or the rear plate 211, the front plate 202 and/or the rear plate 211 may include a region that is bent from a periphery thereof toward the rear plate 211 and/or the front plate 202 and seamlessly extends. The extended region of the front plate 202 and/or the rear plate 211 may be positioned at both ends of, for example, a long edge of the electronic device 200, but is not limited to the above-described examples.

In an embodiment, the side bezel structure 218 may include a metal and/or a polymer. In an embodiment, the rear plate 211 and the side bezel structure 218 may be integrally formed and may include the same material (e.g., a metal material such as aluminum), but are not limited thereto. For example, the rear plate 211 and the side bezel structure 218 may be formed in separate configurations and/or may include different materials.

In an embodiment, the electronic device 200 may include at least one of a display 201, an audio module 203, 204, 207, a sensor module (not illustrated), a camera module 205, 212, 213, a key input device 217, a light emitting device (not illustrated), and/or a connector hole 208. In another embodiment, the electronic device 200 may omit at least one of the components (e.g., a key input device 217 or a light emitting device (not illustrated)), or may further include another component.

In an embodiment, the display 201 (e.g., a display module 160 of FIG. 1) may be visually exposed through a substantial portion of the front plate 202. For example, at least a portion of the display 201 may be visible through the front plate 202 forming the first surface 200A. In an embodiment, the display 201 may be disposed on the rear surface of the front plate 202.

In an embodiment, the outside shape of the display 201 may be formed substantially the same as the outside shape of the front plate 202 adjacent to the display 201. In an embodiment, in order to expand the area in which the display 201 is visually exposed, the distance between the outside of the display 201 and the outside of the front plate 202 may be formed to be generally the same.

In an embodiment, the display 201 (or the first surface 200A of the electronic device 200) may include a screen display area 201A. In an embodiment, the display 201 may provide visual information to a user through the screen display area 201A. In the illustrated embodiment, when the first surface 200A is viewed from the front, it is illustrated that the screen display area 201A is spaced apart from the outside of the first surface 200A and is positioned inside the first surface 200A, but it is not limited thereto. In another embodiment, when the first surface 200A is viewed from the front, at least a portion of the periphery of the screen display area 201A may substantially coincide with the periphery of the first surface 200A (or the front plate 202).

In an embodiment, the screen display area 201A may include a sensing area 201B configured to obtain biometric information of a user. Here, the meaning of "the screen display area 201A includes the sensing area 201B" may be understood to mean that at least a portion of the sensing area 201B may be overlapped on the screen display area 201A. For example, the sensing area 201B, like other areas of the screen display area 201A, may refer to an area in which visual information may be displayed by the display 201 and additionally biometric information (e.g., fingerprint) of a user may be obtained. In another embodiment, the sensing area 201B may be formed in the key input device 217.

In an embodiment, the display 201 may include an area in which the first camera module 205 (e.g., a camera module 180 of FIG. 1) is positioned. In an embodiment, an opening may be formed in the area of the display 201, and the first camera module 205 (e.g., a punch hole camera) may be at least partially disposed in the opening to face the first surface 200A. In this case, the screen display area 201A may surround at least a portion of the periphery of the opening. In another embodiment, the first camera module 205 (e.g., an under display camera (UDC)) may be disposed under the display 201 to overlap the area of the display 201. In this case, the display 201 may provide visual information to the user through the area, and additionally, the first camera module 205 may obtain an image corresponding to a direction facing the first surface 200A through the area of the display 201.

In an embodiment, the display 201 may be coupled to or disposed adjacent to a touch sensing circuit, a pressure sensor capable of measuring the intensity (pressure) of the touch, and/or a digitizer that detects a magnetic field type stylus pen.

In an embodiment, the audio modules 203, 204 and 207 (e.g., an audio module 170 of FIG. 1) may include microphone holes 203 and 204 and a speaker hole 207.

In an embodiment, the microphone holes 203 and 204 may include a first microphone hole 203 formed in a partial area of the third surface 200C and a second microphone hole 204 formed in a partial area of the second surface 200B. A microphone (not illustrated) for obtaining an external sound may be disposed inside the microphone holes 203 and 204. The microphone may include a plurality of microphones to detect the direction of sound.

In an embodiment, the second microphone hole 204 formed in a partial area of the second surface 200B may be disposed adjacent to the camera modules 205, 212 and 213. For example, the second microphone hole 204 may obtain sound according to operations of the camera modules 205, 212, and 213. However, it is not limited thereto.

In an embodiment, the speaker hole 207 may include an external speaker hole 207 and a receiver hole (not illustrated) for a call. The external speaker hole 207 may be formed on a portion of the third surface 200C of the electronic device 200. In another embodiment, the external speaker hole 207 may be implemented as one hole with the microphone hole 203. Although not illustrated, a receiver hole (not illustrated) for a call may be formed on another portion of the third surface 200C. For example, the receiver hole for a call may be formed on the opposite side of the external speaker hole 207 on the third surface 200C. For example, based on the illustration of FIG. 2, the external speaker hole 207 may be formed on the third surface 200C corresponding to the lower end of the electronic device 200, and the receiver hole for a call may be formed on the third surface 200C corresponding to the upper end of the electronic device 200. However, the present invention is not limited thereto, and in another embodiment, the receiver hole for a call may be formed at a position other than the third surface 200C. For example, the receiver hole for a call may be formed by a space spaced apart between the front plate 202 (or display 201) and the side bezel structure 218.

In an embodiment, the electronic device 200 may include at least one speaker (not illustrated) configured to output sound to the outside of the housing 210 through an external speaker hole 207 and/or a receiver hole (not illustrated) for a call.

In an embodiment, the sensor module (not illustrated) (e.g., a sensor module 176 of FIG. 1) may generate an electrical signal or data value corresponding to an internal operating state or an external environmental state of the electronic device 200. For example, the sensor module may include at least one of a proximity sensor, an HRM sensor, a fingerprint sensor, a gesture sensor, a gyro sensor, a pressure sensor, a magnetic sensor, an acceleration sensor, a grip sensor, a color sensor, an infrared (IR) sensor, a biometric sensor, a temperature sensor, a humidity sensor, and an illumination sensor.

In an embodiment, the camera modules 205, 212 and 213 (e.g., a camera module 180 of FIG. 1) may include a first camera module 205 disposed to face the first surface 200A of the electronic device 200, a second camera module 212 disposed to face the second surface 200B, and a flash 213.

In an embodiment, the second camera module 212 may include a plurality of cameras (e.g., a dual camera, a triple camera, or a quad camera). However, the second camera module 212 is not necessarily limited to including a plurality of cameras, and may include one camera.

In an embodiment, the first camera module 205 and the second camera module 212 may include one or a plurality of lenses, an image sensor, and/or an image signal processor.

In an embodiment, the flash 213 may include, for example, a light emitting diode or a xenon lamp. In another embodiment, two or more lenses (infrared camera, wide-angle and telephoto lens) and image sensors may be disposed on one side of electronic device 200.

In an embodiment, the key input device 217 (e.g., an input module 150 of FIG. 1) may be disposed on the third surface 200C of the electronic device 200. In another embodiment, the electronic device 200 may not include some or all of the key input devices 217, and the not included key input device 217 may be implemented on the display 201 in another form such as a soft key.

In an embodiment, the connector hole 208 may be formed on the third surface 200C of the electronic device 200 to accommodate the connector of the external device. A connection terminal (e.g., a connection terminal 178 of FIG. 1) electrically connected to the connector of the external device may be disposed in the connector hole 208. The electronic device 200 according to an embodiment may include an interface module (e.g., an interface 177 of FIG. 1) for processing electrical signals transmitted and received through the connection terminal.

In an embodiment, the electronic device 200 may include a light emitting device (not illustrated). For example, the light emitting device (not illustrated) may be disposed on the first surface 200A of the housing 210. The light emitting device (not illustrated) may provide state information of the electronic device 200 in a form of light. In another embodiment, the light emitting device (not illustrated) may provide a light source interlock with an operation of the first camera module 205. For example, the light emitting device (not illustrated) may include an LED, an IR LED, and/or a xenon lamp.

FIG. 3 is an exploded perspective view of an electronic device according to an embodiment.

Hereinafter, overlapping descriptions of components having the same reference numerals as those of the above-described components will be omitted.

Referring to FIG. 3, the electronic device 200 according to an embodiment may include a frame structure 240, a first printed circuit board 250, a second printed circuit board 252, a cover plate 260, and a battery 270.

In an embodiment, the frame structure 240 may include a sidewall 241 forming an exterior (e.g., the third surface 200B of FIG. 2) of the electronic device 200 and a support portion 243 extending inward from the sidewall 241. In an embodiment, the frame structure 240 may be disposed between the display 201 and the rear plate 211. In an embodiment, the sidewall 241 of the frame structure 240 may surround a space between the rear plate 211 and the front plate 202 (and/or the display 201), and the support portion 243 of the frame structure 240 may extend from the sidewall 241 within the space.

In an embodiment, the frame structure 240 may support or accommodate other components included in the electronic device 200. For example, the display 201 may be disposed on one surface of the frame structure 240 facing one direction (e.g., the +z direction), and the display 201 may be supported by the support portion 243 of the frame structure 240. For another example, a first printed circuit board 250, a second printed circuit board 252, a battery 270, and a second camera module 212 may be disposed on the other surface facing a direction opposite to the one direction (e.g., the -z direction) of the frame structure 240. The first printed circuit board 250, the second printed circuit board 252, the battery 270, and the second camera module 212 may be mounted on a recess defined by the sidewall 241 and/or the support portion 243 of the frame structure 240.

In an embodiment, the first printed circuit board 250, the second printed circuit board 252, and the battery 270 may be coupled to the frame structure 240, respectively. For example, the first printed circuit board 250 and the second printed circuit board 252 may be fixedly disposed in the frame structure 240 through a coupling member such as a screw. For example, the battery 270 may be fixedly disposed on the frame structure 240 through an adhesive member (e.g., a double-sided tape). However, it is not limited by the above-described example.

In an embodiment, a cover plate 260 may be disposed between the first printed circuit board 250 and the rear plate 211. In an embodiment, the cover plate 260 may be disposed on the first printed circuit board 250. For example, the cover plate 260 may be disposed on a surface facing the -z direction of the first printed circuit board 250.

In an embodiment, the cover plate 260 may at least partially overlap the first printed circuit board 250 with respect to the z-axis. In an embodiment, the cover plate 260 may cover at least a partial area of the first printed circuit board 250. Through this, the cover plate 260 may protect the first printed circuit board 250 from physical impact or prevent the connector (e.g., a connector 34 of FIG. 3) coupled to the first printed circuit board 250 from being separated.

In an embodiment, the cover plate 260 may be fixedly disposed on the first printed circuit board 250 through a coupling member (e.g., a screw), or may be coupled to the frame structure 240 together with the first printed circuit board 250 through the coupling member.

In an embodiment, the display 201 may be disposed between the frame structure 240 and the front plate 202. For example, a front plate 202 may be disposed on one side (e.g., a +z direction) of the display 201 and a frame structure 240 may be disposed on the other side (e.g., a -z direction).

In an embodiment, the front plate 202 may be coupled to the display 201. For example, the front plate 202 and the display 201 may adhere to each other through an optical adhesive member (e.g., optically clear adhesive (OCA) or optically clear resin (OCR)) interposed therebetween.

In an embodiment, the front plate 202 may be coupled to the frame structure 240. For example, the front plate 202 may include an outside portion extending outside the display 201 when viewed in the z-axis direction, and may adhere to the frame structure 240 through an adhesive member (e.g., a double-sided tape) disposed between the outside portion of the front plate 202 and the frame structure 240 (e.g., the sidewall 241). However, it is not limited by the above-described example.

In an embodiment, the first printed circuit board 250 and/or the second printed circuit board 252 may be equipped with a processor (e.g., a processor 120 of FIG. 1), a memory (e.g., a memory 130 of FIG. 1), and/or an interface (e.g., an interface 177 of FIG. 1). The processor may include, for example, one or more of a central processing unit, an application processor, a graphic processing unit, an image signal processor, a sensor hub processor, or a communication processor. The memory may include, for example, a volatile memory or a nonvolatile memory. The interface may include, for example, a high definition multimedia interface (HDMI), a universal serial bus (USB) interface, an SD card interface, and/or an audio interface. The interface may electrically or physically connect the electronic device 200 to an external electronic device, and may include a USB connector, an SD card/MMC connector, or an audio connector. In an embodiment, the first printed circuit board 250 and the second printed circuit board 252 may be operatively or electrically connected to each other through a connection member (e.g., a flexible printed circuit board).

In an embodiment, the battery 270 may supply power to at least one component of the electronic device 200. For example, the battery 270 may include a rechargeable secondary cell or a fuel cell. At least a portion of the battery 270 may be disposed on substantially the same plane as the first printed circuit board 250 and/or the second printed circuit board 252.

The electronic device 200 according to an embodiment may include an antenna module (not illustrated) (e.g., an antenna module 197 of FIG. 1). In an embodiment, the antenna module may be disposed between the rear plate 211 and the battery 270. The antenna module may include, for example, a near field communication (NFC) antenna, a wireless charging antenna, and/or a magnetic secure transmission (MST) antenna. The antenna module, for example, may perform short-range communication with an external device, or wirelessly transmit and receive power to and from the external device.

In an embodiment, the first camera module 205 (e.g., a front camera) may be disposed in at least a portion (e.g., a support portion 243) of the frame structure 240 so that the lens may receive external light through a partial area (e.g., a camera area 137 of FIG. 2) of the front plate 202.

In an embodiment, the second camera module 212 (e.g., a rear camera) may be disposed between the frame structure 240 and the rear plate 211. In an embodiment, the second camera module 212 may be electrically connected to the first printed circuit board 250 through a connection member (e.g., a connector). In an embodiment, the second camera module 212 may be disposed such that the lens may receive external light through a camera area 284 of the rear plate 211 of the electronic device 200.

In an embodiment, the camera area 284 may be formed on the surface (e.g., a rear surface 200B of FIG. 2) of the rear plate 211. In an embodiment, the camera area 284 may be formed to be at least partially transparent so that external light may be incident to the lens of the second camera module 212. In an embodiment, at least a portion of the camera area 284 may protrude from the surface of the rear plate 211 to a predetermined height. However, it is not limited to thereto, and in another embodiment, the camera area 284 may form a plane substantially the same as the surface of the rear plate 211.

In an embodiment, the housing 210 of the electronic device 200 may mean a configuration or structure forming at least a portion of the exterior of the electronic device 200. In this regard, at least a portion of the front plate 202, the frame structure 240, and/or the rear plate 211 forming the exterior of the electronic device 200 may be referred to as the housing 210 of the electronic device 200.

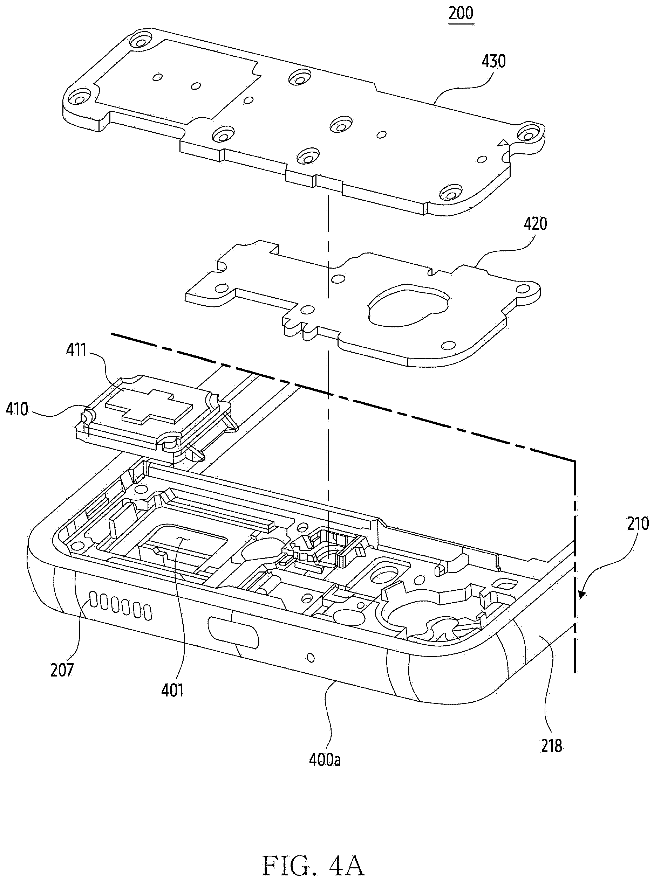

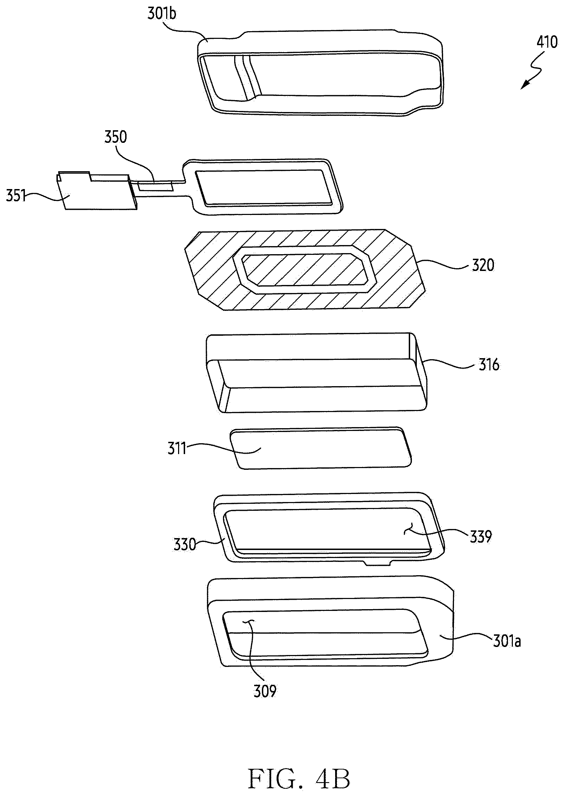

FIG. 4a is an exploded perspective view of a region of an electronic device including a speaker according to an embodiment. FIG. 4b is an exploded perspective view of an exemplary speaker.

Referring to FIG. 4a, an electronic device 200 may include a side bezel structure 218, a speaker 410, a printed circuit board 420 (e.g., a second printed circuit board 252 of FIG. 3) and a bracket 430. In some embodiments, the bracket 430 may be omitted from the electronic device 101.

According to an embodiment, the side bezel structure (or a side member) 218 (e.g., a sidewall 241 of a frame 240 of FIG. 3) may be included. The side bezel structure 218 or the frame 240 may be disposed between a first surface (e.g., a first surface 200A of FIG. 2) and a second surface (e.g., a second surface 200B of FIG. 2) of a housing 210, and may form a side surface 400a (e.g., a third surface 200C of FIG. 2). The side surface 400a may be a surface disposed between the first surface 200A and the second surface 200B. In an embodiment, the side bezel structure 218 may be coupled to a front plate 202 (e.g., the front plate 202 of FIG. 2) and/or a rear plate 211 (e.g., the rear plate 211 of FIG. 2) to form at least a portion of the side surface 400a of the electronic device 200. The side bezel structure 218 may include a seating groove 401 and a speaker hole 207.

Referring again to FIG. 4b, the speaker 410 may be configured to provide an audio signal to the outside of the electronic device 200. For example, the speaker may include a first enclosure 301a, a second enclosure 301b, an elastic member 330, an printed circuit board 350, a diaphragm 311, a voice coil 316, and/or a magnet 320. The first enclosure 301a and the second enclosure 301b may form an external shape of the speaker 410. The first enclosure 301a may form the front surface of the speaker 410, and the second enclosure 301b may form the rear surface of the speaker 410. A front surface of the speaker 310 may be a surface to which an audio output (e.g., sound wave) provided through the diaphragm 311 of the speaker is radiated. The rear surface of the speaker 410 may be a surface opposite to the front surface of the speaker 410.

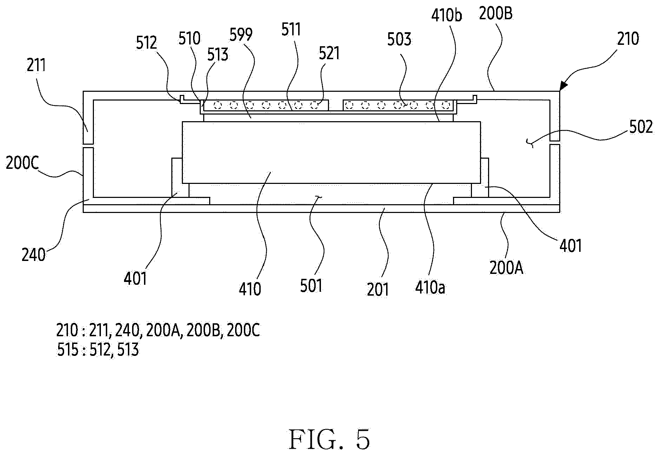

The first enclosure 301a may include a first radiation hole 309 connected to a sound duct (e.g., the sound duct 501 of FIG. 5). The first radiation hole 309 may overlap the diaphragm 311 when looking at the front surface of the speaker 310. The first radiation hole 309 may be disposed along the circumference of the diaphragm 311.

The elastic member 330 may be disposed between the speaker 310 and the first enclosure 301a. The elastic member 330 may elastically support components of the speaker 410 (e.g., the diaphragm 311, the voice coil 316, the magnet 320 or the printed circuit board 350). The elastic member 330 may be disposed along the diaphragm 311. The elastic member 330 may include a second radiation hole 339. The second radiation hole 339 may be connected to the first radiation hole 309. The second radiation hole 339 and the first radiation hole 309 may be connected to the sound duct. An audio output provided through the diaphragm 311 may be transmitted to the outside of the electronic device through the first radiation hole 309, the second radiation hole 339, and the sound duct. The elastic member 330 may elastically support the diaphragm 311 or elastically support a structure which presses the diaphragm 311.

The voice coil 316 may provide kinetic energy for generating physical shaking (e.g., vibration) of the diaphragm 311. For example, the voice coil 316 may generate the kinetic energy based on the current related to the audio signal and the interaction with the magnet 320. The diaphragm 311 may generate the vibration and provide sound waves based on the kinetic energy. The speaker 410 may provide the audio output from a diaphragm 311 to outside of the electronic device 200 through acoustic duct 501 connected to the speaker 410.

The printed circuit board 350 may be electrically connected to a main board in the electronic device 200. The printed circuit board 350 may be a flexible printed circuit board. An end of the printed circuit board 350 may be connected to the speaker 410 and the other end of the printed circuit board 350 may be connected to the connector 351. The connector 351 may be connected to the main board in the electronic device 200 or to another connector connected to the main board. The printed circuit board 350 may extend from the speaker 300 within the case 301 to the outside of the case 301 . However, it is not limited thereto.

Referring to FIG. 4a, the side bezel structure 218 may include the seating groove 401 in which the speaker 410 is seated. The speaker 410 may be disposed in the seating groove 401. The speaker 410 may be supported by the seating groove 401. For example, the speaker 410 may be inserted into the seating groove 401 or may be fixed to the seating groove 401 through an adhesive member. An elastic member (not illustrated) may be disposed between the speaker 410 and the seating groove 401. For example, the elastic member may include an adhesive material. The elastic member may reduce damage to the speaker 410 due to an external impact. The side bezel structure 218 may connect an internal space of the seating groove 401 and the speaker hole 207.

According to an embodiment, a spacer 411 may be disposed on the speaker 410. The spacer 411 may be disposed between the speaker 410 and the second surface 200B of the housing 210. The spacer 411 may press a portion of the speaker 410, e.g. a middle portion. For example, when the electronic device 200 is assembled, the spacer 411 may be pressed by the second surface 200B of the housing 210 or the rear plate 211 (e.g., the rear plate 211 of FIG. 2) configuring the second surface 200B. As the pressurized spacer 411 presses the speaker 410, the speaker 410 may be disposed between the spacer 411 and the seating groove 401. The speaker 410 may be substantially fixed to a designated position (e.g., within the seating groove 401) within the housing 210 by pressurization of the spacer 411 and the seating groove 401. The term "substantially fixed" may include, i.e. still allow, moving finely due to the external impact or flowing within a designated range. The spacer 411, when providing the audio signal from the speaker 410, may reduce noise due to shaking of the speaker 410 or collision between the speaker 410 and the internal structure by fixing the speaker 410 to the seating groove 401. The spacer 411 has been described as being in direct contact with the rear plate 211 configuring the second surface 200B of the housing 210, but is not limited thereto. The electronic device 200 may further include a structure for pressing the spacer 411. For example, the electronic device 200 may include the bracket 430 surrounding the speaker 410 and the printed circuit board 420. The bracket 430 may press the speaker 410 and the spacer 411 by being assembled with the side bezel structure 218. However, in case a bracket 430 is not included in the electronic device 200, the speaker 410 may be fixed differently.

According to an embodiment, when the bracket 430 is assembled to the side bezel structure 218, the bracket 430 may be in contact with the spacer 411 disposed on the speaker 410. For example, as the bracket 430 and the side bezel structure 218 are assembled, the bracket 430 may press the spacer 411. As the pressurized spacer 411 presses the speaker 410, the speaker 410 may be disposed between the spacer 411 and the seating groove 401. The spacer 411 may reduce the generation of noise due to the flow of the speaker 410 by fixing the speaker 410 to the seating groove 401.

According to an embodiment, the printed circuit board 420 may be disposed on a side of the electronic device 200. The printed circuit board 420 may be distinct from a printed circuit board (e.g., a first printed circuit board 250 of FIG. 3) on which a processor (e.g., a processor 120 of FIG. 1) is disposed. The printed circuit board 420 may be connected to an interface for connecting to an external electronic device or an electronic component (e.g., the speaker 410) disposed on a side surface of the electronic device 200. The printed circuit board 420 may be electrically connected to the printed circuit board on which the processor 120 is disposed through a flexible printed circuit board or a cable. The speaker 410 may receive an electrical signal related to the audio signal through the printed circuit board 420.

The electronic device 200 may include a resonance space. The resonance space may generate vibration that generates the audio signal of the speaker 410. The resonance space may be a space for the vibration of the audio signal. The speaker 410 may require a wide, i.e. a comparatively large, resonance space in order to provide an audio signal of a low frequency band. As the electronic device 200 is assembled, a space between the rear surface (e.g., the surface on which the spacer 411 is disposed) of the speaker 410 and the bracket 430 or a space between the rear surface of the speaker 410 and the second surface 200B of the housing 210 may be used as the resonance space. The resonance space may be reduced by the volume of the spacer 411 by the spacer 411 disposed for fixing the speaker 410. In order to provide a low-pitched audio signal, it is necessary to compensate for the resonance space being reduced by the volume of the spacer 411.

Regarding the structure for compensation of the resonance space, it will be described below in FIG. 5.

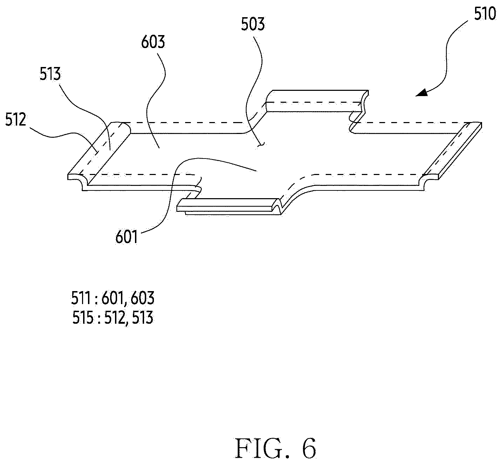

FIG. 5 is a schematic cross-sectional view obtained by cutting a region including a speaker according to an embodiment. FIG. 6 is a perspective view of a spacer according to an embodiment.

Referring to FIG. 5, the electronic device 200 may include a housing 210, a frame 240, a speaker 410, and a spacer 510. The housing 210 may include a first surface 200A, a second surface 200B opposite to the first surface 200A, and a third surface 200C (or side/lateral surface) between the first surface 200A and the second surface 200B. The housing 210 may provide an internal space for electronic components for the electronic device 200. The housing 210 may include a front plate (e.g., a front plate 202 of FIG. 2) supporting a rear plate 211 and a display 201 (e.g., a display 201 of FIG. 2). The rear plate 211 may form the second surface 200B, and the front plate 202 may form the first surface 200A. The front plate 202 may be spaced apart from the rear plate 211 for the internal space.

According to an embodiment, the frame 240 may be disposed between the first surface 200A and the second surface 200B. For example, the frame 240 may be disposed between the front plate 202 and the rear plate 211. The frame structure 240 may provide the internal space together with the front plate 202 and the rear plate 211. The frame 240 may form the third surface 200C. The frame structure 240 may extend into the internal space from the third surface 200C. The extended portion may be formed as a separate structure and attached or bonded to the frame 240 configuring the third surface 200C. The extended portion may be integrally formed with the frame 240.

According to an embodiment, the frame 240 may include a structure for seating of the electronic component. For example, the frame 240 may include a seating groove 401 for supporting the speaker 410. The seating groove 401 may be formed in the extended portion of the frame 240 within the internal space of the housing 210.

According to an embodiment, the speaker 410 may include a surface 410a partially in contact with a portion of the frame 240 and another surface 410b opposite to the surface 410a. The surface 410a of the speaker 410 may be a radiation surface through which an audio signal is radiated. Another surface 410b of the speaker 410 may be a surface opposite to the radiation surface. For example, a surface 410a of the speaker 410 may face a sound duct 501 through which the audio signal is transmitted. The sound duct 501 may be connected to a speaker hole 207 (e.g., the speaker hole 207 of FIG. 2). The speaker 410 may transmit the audio signal to the sound duct 501 and transmit the audio signal to the outside through the speaker hole 207.

According to an embodiment, another surface 410b of the speaker 410 may face a resonance space. The resonance space may be a space surrounded by another surface 410b of the speaker 410, a side surface of the speaker 410, and a portion of the housing 210. The resonance space may include a first space 503 and a second space 502. The first space 503 and the second space 502 may be partitioned by the spacer 510 (e.g., a spacer 411 of FIG. 4a).

According to an embodiment, the spacer 510 may be formed of a metal material. The spacer 510 may include a curved portion by being formed of a thin plate. The spacer 510 may include the planar portion 511, and stepped portions 515. The stepped portions 515 may include horizontal portions 512, and connection portions 513.

The planar portion 511 may be in contact with another surface 410b of the speaker 410. The above-described meaning of contacting may include not only a case where A is directly attached to B, but also a case where an elastic member or an adhesive member is embedded between A and B for protection of B or coupling of B and A. For example, the planar portion 511 may directly contact another surface 410b of the speaker 410. For example, an elastic member 599 may be interposed between the planar portion 511 and another surface 410b. The elastic member 599 may prevent another surface 410b of the speaker 410 from being damaged by the spacer 510. The elastic member 599 may include poron, rubber, foam, or silicon. The elastic member 599 may further include the adhesive material to fix the spacer 510 at a designated position on the speaker 410. The planar portion 511 may be a portion of the spacer 510 that presses the speaker 410.

According to an embodiment, the stepped portions 515 respectively include horizontal portions 512 supported by the rear plate 211 and respectively include connection portions 513, the horizontal portions 512 may be in contact with the inner surface of the housing 210 facing the second surface 200B and may be spaced apart from another surface 410b of the speaker 410. The horizontal portions 512 may be in contact with a portion of the housing 210 forming the second surface 200B. For example, the horizontal portions 512 may be in contact with the rear plate 211. The horizontal portions 512 may be fixed to the rear plate 211. For example, the horizontal portions 512 and the rear plate 211 may be formed through a double injection process. The rear plate 211 may be formed of a polymer material. According to an embodiment, the horizontal portions 512 may respectively be inserted into each of grooves formed in the rear plate 211 and fixed to the rear plate 211. The spacer 510 may be fixed to the rear plate 211 and press the speaker 410 through the planar portion 511 when the electronic device 200 is assembled. The pressurized speaker 410 may be fixed to a designated position within the housing 210.

According to an embodiment, the stepped portions 515 may extend from the planar portion 511. each of the connection portions 513 may connect the planar portion 511 and each of the horizontal portions 512. Since the planar portion 511 is disposed on another surface 410b of the speaker 410, the horizontal portions 512 may be spaced apart from the planar portion 511 and may be disposed on the rear plate 211 forming the second surface 200B, a step may be formed between the planar portion 511 and the horizontal portion 512. As the connection portion 513 connects the planar portion 511 and the horizontal portion 512, the planar portion 511 and the horizontal portion 512 may be integrally formed. According to an embodiment, each of the connection portions 513 may be extended from the planar portion 511 to each of the horizontal portions 512.

According to an embodiment, the connection portion 513 may be inclined with respect to the planar portion 511 and the horizontal portion 512. The planar portion 511 may face the rear plate 211 in a first direction. The horizontal portions 512 may be spaced apart from the surface of the speaker and face the speaker 410 in a second direction opposite to the first direction. The connection portions 513 may extend in a third direction different from the first and second directions.

According to an embodiment, the electronic device may provide a resonance space surrounded by a remaining surface of the speaker 410 except for a surface connected to the radiation region of the front surface 410a of the speaker 410 and a structure inside the electronic device 200. The resonance space may be a space around the speaker 410 except for the sound duct 501. For example, the resonance space may include the first space 503 and the second space 502 between the speaker 410 and the structure inside the electronic device 200.

According to an embodiment, the first space 503 may be a space between a portion of the rear plate 211 and the planar portion 511 corresponding to the second surface 200B. For example, the first space 503 may be surrounded by a portion of the second surface 200B, the planar portion 511, and the connection portions 513. The first space 503 may be an empty space.

According to an embodiment, the second space 502 may mean the remaining space except for the sound duct 501 among the spaces in contact with the speaker 410. For example, the second space 502 may be a space surrounding another surface 410b and the side surface of the speaker 410. The second space 502 may be a space between another surface 410b of the speaker 410 and the spacer 510 and a space between the side surface of the speaker 410 and another structure in the electronic device 200.

According to an embodiment, the first space 503 may be connected to the second space 502 between another surface 410b and the horizontal portions 512 for the resonance space for the audio signal transmitted toward the speaker hole 207 formed on the side surface, from a surface 410a of the speaker 410 through the sound duct 501 formed in the frame arranged with respect to a surface of the speaker 410a. The first space 503 may be connected to the second space through an opening formed in the connection portions 513. According to an embodiment, the first space 503 may be connected to the second space 502 through a gap between a plurality of connection portions. For example, each of the connection portion 513 may be extended to each of the horizontal portions 512. The connection portions 513 may be separated from each other to utilize the first space 503 as a resonance space.

According to an embodiment, when the spacer 510 fills the first space 503 with another material, the resonance space may be the second space 502. According to an embodiment, the spacer 510 including the planar portion 511, the horizontal portion 512, and the connection portion 513 may be formed of a plate and bent at the connection portion 513 to provide the first space 503. As shown in FIG. 6, the spacer 510 may have a cross-like shape when viewed from above. According to an embodiment, the spacer 510 may increase the resonance space of the speaker 410 by connecting the first space 503 and the second space 502. Based on the increase in the resonance space of the speaker 410, it is possible to provide resonance in a low-pitched range, so that the performance of the speaker 410 may be improved. In case that an elastic member formed of urethane or boron is used instead of the spacer 510, the resonance space disposed on another surface 410b of the speaker 410 may be reduced. The spacer 510 may further buffer an external impact applied to the speaker 410. The spacer 510 may expand the resonance space by connecting the space between another surface 410b of the speaker 410 and the rear plate 211 facing the other surface 410b to the resonance space. The electronic device 200 including the spacer 510 may have the technical effects of improving low-band audio performance by expanding the resonance space while having toughness against external impact.

According to an embodiment, the electronic device 200 may further include an air adsorbent 521. The air adsorbent 521 may be disposed within the first space 503. The air adsorbent 521 may substantially expand a resonance space by adsorbing air or gas. The air adsorbent 521 may be disposed not only in the first space 503 but also in the second space 502.

Referring to FIG. 6, the spacer 510 may include the planar portion 511 and the horizontal portion 512, wherein said portions basically extend in a direction that may be referred to as a horizontal direction. The planar portion 511 may be in contact with another surface 410b of the speaker 410. The planar portion 511 may increase the contact area of the speaker 410 with another surface 410b, thereby widening the pressurized portion of the speaker 410. For example, the planar portion 511 may include a core 601 and extension portions 603 extending from corners of the core 601. The core 601 and the extension portions 603 may be substantially planar. The spacer 510 including the extension portions 603 may increase the contact area with the speaker 410. The spacer 510 having a large contact area with the speaker 410 may provide an increased coupling force with the speaker 410 according to assembly of the electronic device 200 (e.g., the electronic device 200 of FIG. 2). Based on the increased coupling force, the speaker 410 may be fixed to a designated position inside the electronic device 200.

According to an embodiment, the spacer 510 may include the connection portion 513 that extends from the end of the extension portions 603 and from the planar portion 511 with an inclination. The connection portion 513 may extend substantially perpendicular to the planar portion 511, but may include a portion having a curved surface. Hence, said portion basically extends in a direction that may be referred to as a vertical direction. The spacer 510 may be formed by pressing a metal plate. For example, the spacer 510 may be formed on the metal plate through a press process. For example, the metal plate may be pressed by a press corresponding to the planar portion 511 to form the planar portion 511 recessed from the horizontal portion 512. The curved portion of the spacer 510 may be formed by the press process. The horizontal portion 512 of the spacer 510 formed by the press process may be formed in a direction away from the planar portion.

According to an embodiment, the connection portion 513 may be plural. A plurality of connection portions may be spaced apart from each other. The spaced gap of the connection portion may open a portion of the first space 503. For example, the first space 503 may be connected to the second space 502 through the gap spaced apart from the connection portions. The connection portion 513 may surround a portion of the edge of the planar portion 511. For example, one connection portion 513 among the plurality of connection portions may be disposed between the planar portion 511 and the horizontal portion 512. For example, the plurality of connection portions including the connection portion 513 or the horizontal portions 512 may extend from a portion of the extension portions 603 of the planar portion 511 to be spaced apart from each other. The connection portion 513 may extend from an end of the extension portions 603 spaced apart from the boundary between the core 601 and the extension portions 603. The volume of the first space 503 may be determined based on the length of the connection portion 513, which may also be referred to as a height of the spacer 510.

According to an embodiment, the horizontal portions 512 are disposed outside of the planar portion 511 when viewing the planar portion 511 of the spacer 510 in a vertical direction. The connection portions 513 are separated each other to use, as a resonance space, an inner space 503 of the spacer. As the horizontal portions 512 are disposed outside the planar portion 511, the efficiency of the work process may be increased. As the horizontal portions 512 disposed outside the planar portion 511 are bonded to the rear plate 211 or another plate (bracket or metal plate) for bonding, the bonded portion may be visually confirmed. The horizontal portions 512 disposed outside the planar portion 511 may be attached to the plate by wrapping the horizontal portions 512 with an adhesive tape.

According to the above-described embodiment, the electronic device 200 may include the housing 210 including the first surface 200A, the second surface 200B opposite to the first surface 200A, and the third surface 200C between the first surface 200A and the second surface 200B, the frame 240 disposed between the first surface 200A and the second surface 200B and forming the third surface 200C, the speaker 410 including a surface 410a partially contacted on a portion of the frame 240 and another surface 410b opposite to the surface 410a, and the spacer 510 disposed between the other surface 410b and the second surface 200B. According to an embodiment, the spacer 510 may include the planar portion 511 in contact with the other surface 410b of the speaker 410 and spaced apart from the second surface 200B, the horizontal portion 512 in contact with the second surface 200B and spaced apart from the other surface 410b of the speaker 410, and the connection portion 513 between the planar portion 511 and the horizontal portion 512. When viewing the second surface 200B from above, the planar portion 511 may face the horizontal portion 512 based on the connection portion 513. The first space 503 between the second surface 200B and the planar portion 511 may be connected to the second space 502 between the other surface 410b and the horizontal portion 512 for the resonance space for the audio signal transmitted toward the speaker hole 207 of the third surface 200C, from the surface 410a of the speaker 410, through the sound duct 501 of the frame structure 240 arranged with respect to the surface 410a of the speaker 410.

According to the above-described embodiment, the electronic device 200 may expand the resonance space from the second space 502 to the first space 503. In other words, the first space 503 and the second space 502 are interconnected so as to provide an enlarged resonance space. Based on the expanded resonance space, the speaker 410 of the electronic device 200 may provide improved performance in a low-pitched sound band. For example, the expanded resonance space may provide a wide resonance space for resonance of an audio signal in the low-pitched sound band, e.g. below 1000 Hz, particularly below 400 Hz.

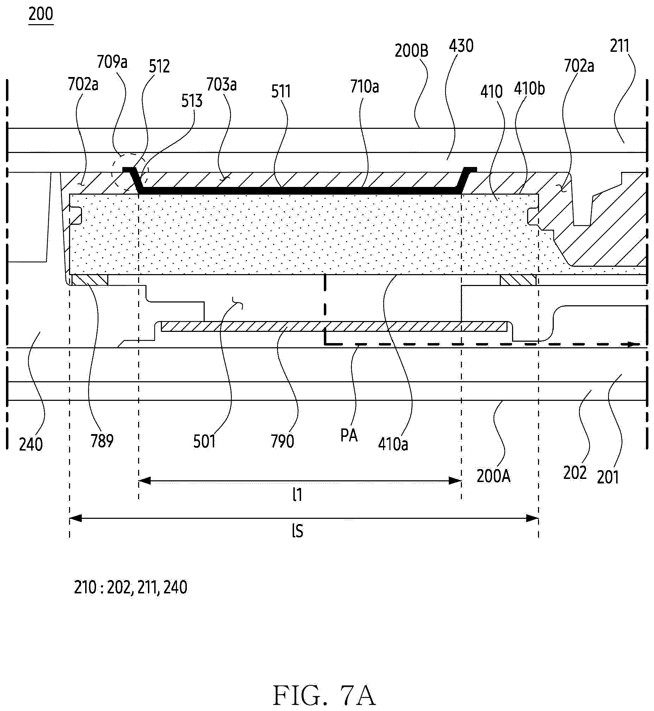

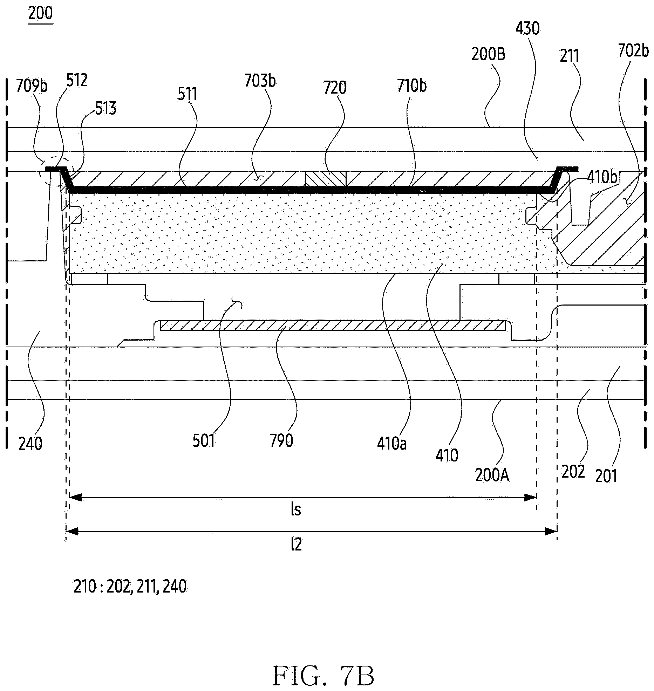

FIG. 7A is a cross-sectional view obtained by cutting a region including a spacer of an exemplary speaker according to an embodiment. FIG. 7B is a cross-sectional view obtained by cutting a region including an illustratively extended spacer according to an embodiment.

Referring to FIG. 7A, an electronic device 200 may include a display 201 disposed toward a first surface 200A, a front plate 202 disposed on the display 201, and a rear plate 212 disposed toward the second surface 200B opposite to the first surface 200A. The electronic device 200 may include a speaker 410 disposed therein. For example, the speaker 410 may be disposed in an internal space between the front plate 202 and a rear plate 211. A surface 410a of the speaker 410 may face the first surface 200A.

According to an embodiment, another surface 410b opposite to the surface 410a may face the second surface 200B. The surface 410a may be in contact with a portion of a frame 240. For example, a surface 410a of the speaker 410 may be attached through the frame 240 and an adhesive member 789. For example, the adhesive member 789 may be disposed between the speaker 410 and the frame 240. The adhesive member 789 is disposed between the speaker 410 and the frame 240 so that the speaker 410 may be seated on the frame 240. An audio signal transmitted from a surface 410a of the speaker 410 may be transmitted to a speaker hole 207 (e.g., the speaker hole 207 of FIG. 2) through the sound duct 501. A portion of the path extending to the speaker hole 207 through the sound duct 501 may be isolated from the internal space of the electronic device 200 by the sealing member 790.

According to an embodiment, the sealing member 790 may penetrate the audio signal emitted from a surface 410a of the speaker 410. The sealing member 790 may prevent dust and moisture from flowing into the electronic device 200 through the speaker hole 207. The sealing member 790 may include a membrane material. For example, the audio signal may be emitted from a surface 410a of the speaker 410. The audio signal emitted from a surface of the speaker 410 may be transmitted to the speaker hole 207 along an acoustic path PA. The sealing member 790 may be disposed on the acoustic path PA. The sealing member 790 may penetrate the audio signal transmitted along the acoustic path PA. The sealing member 790 may prevent external foreign substances introduced through the acoustic path PA from moving into the electronic device 200.

According to an embodiment, another surface 410b of the speaker 410 may be in contact with a spacer 710a. The spacer 710a may include a planar portion 511 in contact with another surface 410b of the speaker 410. The spacer 710a may include a connection portion 513 that separates the planar portion 511 from the rear plate 211. The spacer 710a may include a horizontal portion 512 configured to be fixed to a structure inside the electronic device 200. The horizontal portion 512 may be inserted into the bracket 430 in contact with the rear plate 211. The bracket 430 may be integrally formed with the rear plate 211. For example, the horizontal portion 512 may be inserted into and fixed to a groove formed in the rear plate 211. The horizontal portion 512 may also be connected to the rear plate 211 in a different manner. In any case, the bracket 430 may also be omitted according to some embodiments.

According to an embodiment, the end of the horizontal portion 512 may be fixed to the rear plate 211 or the bracket 430 at the coupling region 709a. The bracket 430 or the rear plate 211 may be formed of a polymer material. The horizontal portion 512 may be coupled to the bracket 430 or the rear plate 211 through an injection process. A first space 703a may be surrounded by the planar portion 511, the connection portion 513, and the bracket 430. A second space 702a may be a space between another surface 410b of the speaker 410 and the structure, and a space between a side surface of the speaker 410 and the structure. The second space 702a may be surrounded by the frame 240 and the rear plate 211 or the bracket 430 in order to be used as a resonance space. The second space 702a is a space between the frame 240 and another structure (e.g., the rear plate 211 or the bracket 430), and may be isolated from another space inside the electronic device 200 by the sealing member. The second space 702a may be connected to the first space 703a to expand the resonance space. In order to fix the speaker 410, the planar portion 511 of the spacer 710a and another surface 410b of the speaker 410 may be in contact with each other. In case that the length 11 of the spacer 710a is shorter than the width of the speaker 410, the spacer 710a may transmit a pressing force to the speaker 410. In case that the pressing force transmitted to the speaker 410 through the spacer 710a is insufficient, the length 11 of the spacer 710a may be formed to be long.

Referring to FIG. 7B, the electronic device 200 may include the display 201 disposed toward the first surface 200A, the front plate 202 disposed on the display 201, and the rear plate 212 disposed toward the second surface 200B opposite the first surface 200A. The electronic device 200 may include the speaker 410 disposed therein. A surface 410a of the speaker 410 may face the first surface 200A. Another surface 410b opposite to the surface 410a may face the second surface 200B. The surface 410a may be in contact with a portion of the frame 240. The audio signal transmitted from a surface 410a of the speaker 410 may be transmitted to the speaker hole 207 (e.g., the speaker hole 207 of FIG. 2) through the sound duct 501. A portion of the path extending to the speaker hole 207 through the sound duct 501 may be isolated from the internal space of the electronic device 200 by the sealing member 790.

According to an embodiment, another surface 410b of the speaker 410 may be in contact with a spacer 710b. Compared to the previous, the spacer 710b in FIG. 7B has a greater overall length, i.e. extension in a horizontal direction, than the spacer 710a in FIG. 7A. In the coupling region 709b including the horizontal portion 512, the end of the horizontal portion 512 may be fixed to the rear plate 211 or the bracket 430. The horizontal portion 512 may be coupled to the bracket 430 or the rear plate 211 through the injection process. The first space 703a may be surrounded by the spacer 710b and the bracket 430. The second space 702a may be the space between the side surface of the speaker 410 and the structure. The second space 702a may be surrounded by the frame 240 and the rear plate 211 to be used as the resonance space. In order to fix the speaker 410, a portion of the spacer 710b (e.g., the planar portion 511) and another surface 410b of the speaker 410 may be in contact with each other. In case that the length l2 of the spacer 710b is longer than the width ls of the speaker 410, it may be difficult for the spacer 710b to transmit the pressing force to the speaker 410. In order to efficiently transmit the pressing force of the spacer 710b, a protruding region 720 protruding from the bracket 430 toward the spacer 710b may be included.

According to an embodiment, in order to increase the pressing force transmitted to the speaker 410, the spacer 710b may be formed long. The protruding region 720 may increase the transmission force of the pressing force transmitted to the speaker 410 of the spacer 710b formed long.

According to the above-described embodiment, the electronic device 200 may include the spacers 710a and 710b providing the first space 703a or 703b to secure the resonance space. The spacers 710a and 710b may connect the second spaces 702a and 702b and the first spaces 703a and 703b by including the structure as shown in FIG. 6. Based on the expanded resonance space, the electronic device 200 may provide the speaker 410 having improved performance.

According to an embodiment, a structure for supporting the spacer 710b may be included to increase the pressing force of the spacer 710b for fixing the speaker 410 for the speaker 410. The protruding region 720 protruding toward the spacer 710b may provide uniform transmission of the pressing force to the speaker 410.

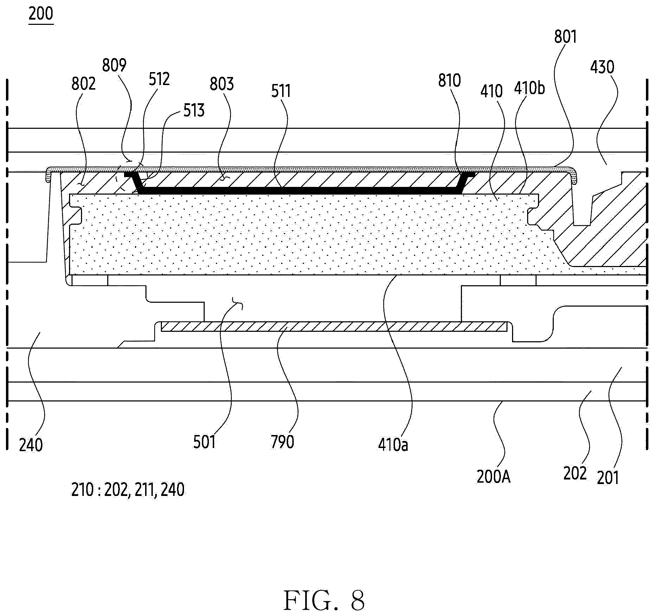

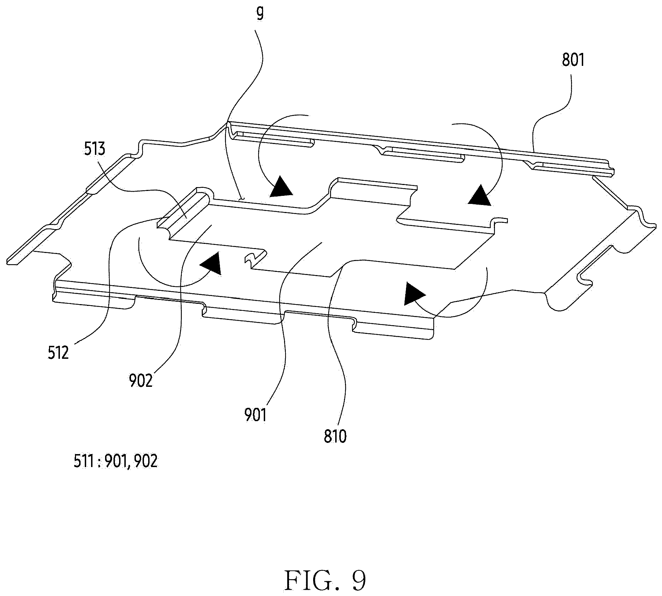

FIG. 8 is a cross-sectional view obtained by cutting a region including an exemplary bracket disposed between a spacer and a rear plate according to an embodiment. FIG. 9 is a perspective view illustrating an exemplary coupling structure of a bracket and a spacer according to an embodiment.

Referring to FIG. 8, an electronic device 200 may include a display 201 disposed toward a first surface 200A, a front plate 202 disposed on the display 201, and a rear plate 212 disposed toward a second surface 200B opposite the first surface 200A. The electronic device 200 may include a speaker 410 disposed therein. The speaker 410 may be disposed in a structure (e.g., a seating groove 401 of FIG. 4a) formed in a frame 240. For example, a portion of a surface 410a of the speaker 410 may be in contact with the frame 240. An audio signal transmitted from a surface 410a of the speaker 410 may be transmitted to a speaker hole 207 (e.g., a speaker hole 207 of FIG. 2) through a sound duct 501. A portion of the path extending to the speaker hole 207 through the sound duct 501 may be isolated from the internal space of the electronic device 200 by a sealing member 790.

According to an embodiment, another surface 410b of the speaker 410 may be in contact with a spacer 810. The spacer 810 may include a planar portion 511 in contact with another surface 410b. The spacer 810 may include a connection portion 513 separating the planar portion 511 from a rear plate 211. The connection portion 513 may separate the planar portion 511 of the spacer 810 from a metal plate 801. The spacer 810 may include a horizontal portion 512 configured to be fixed to a structure inside the electronic device 200. The horizontal portion 512 may be bonded to the metal plate 801 in contact with the rear plate 211. A portion of the metal plate 801 may be inserted into the bracket 430. For example, the end of the metal plate 801 may be bent to be inserted into the bracket 430. The bracket 430 may include a groove for coupling with the end of the metal plate 801. The bracket 430 may be integrally formed with the rear plate 211. For example, the end of the metal plate 801 may be inserted into the groove formed in the rear plate 211 and fixed thereto.

According to an embodiment, the end of the metal plate 801 may be fixed to the rear plate 211 or the bracket 430 at a coupling region 809. The end of the metal plate 801 may be coupled to the bracket 430 or the rear plate 211 through an injection process. The horizontal portion 512 of the spacer 810 may be bonded to a surface of the metal plate 801 coupled by the injection process. The horizontal portion 512 may be fitted, hooked, screwed, or bonded to the metal plate 801 or the rear plate 212. For example, in the coupling region 809, the horizontal portion 512 may be welded and fixed to a surface of the metal plate 801.

According to an embodiment, the first space 803 may be surrounded by the planar portion 511, the connection portion 513 and the metal plate 801. The second space 802 may be a space between another surface 410b of the speaker 410 and the metal plate 801 and the space between the side surface of the speaker 410 and the structure. The second space 802 may be surrounded by the frame 240 and the rear plate 211 to be used as the resonance space. The second space 802 is a space between the frame structure 240 and another structure and may be isolated from another space inside the electronic device 200 by a sealing member. The second space 802 may be connected to the first space 803 to expand the resonance space.

Referring to FIG. 9, a metal plate 801 may be bonded to the spacer 810. For example, the metal plate 801 may be bonded on top of the spacer 810. The spacer 810 may include the planar portion 511 and the horizontal portion 512. The planar portion 511 of the spacer 810 may include a core 901 and extension portions 902. As the planar portion 511 includes extension portions 902 extending from the core 901, the planar portion 511 may increase the contact area with another surface 410b of the speaker 410. Based on the increased contact area, the planar portion 511 may increase the pressurized portion of the speaker 410. The core 901 and the extension portions 902 may be substantially planar. A spacer 910 including the extension portions 902 may increase the contact area with the speaker 410. The spacer 910 having a large contact area with the speaker 410 may provide an increased coupling force applied to the speaker 410 as the electronic device 200 (e.g., the electronic device 200 of FIG. 2) is assembled. Based on the increased coupling force, the speaker 410 may be fixed to a designated position inside the electronic device 200.

According to an embodiment, the spacer 910 may include the connection portion 513 that extends from the end of the extension portions 902 and from the planar portion 511 with an inclination. The connection portion 513 may extend substantially vertically with respect to the planar portion 511, but may include a portion having a curved surface. The horizontal portion 512 of the spacer 510 may be formed in a direction away from the planar portion.

According to an embodiment, the planar portion 511 of the spacer 910 may be spaced apart from the metal plate 801. As the spacer 910 of the remaining portion except for the horizontal portion 512 is spaced apart from the metal plate 801, a first space (e.g., the first space 803 of FIG. 8) between the spacer 910 and the metal plate 801 and a space between another surface 410b of the speaker 410 (e.g., the speaker 410 of FIG. 8) and the metal plate 801 may be connected. For example, the first space 803 and the second space 802 may be connected to each other through a gap g between the spacer 910 and the metal plate 801, e.g. between a lower surface of the metal plate 801 and an upper surface of the spacer 910 that is opposed to the surface of the space 910, which faces the other surface 410b of the speaker 410. Through the connection of the first space 803 and the second space 802, the resonance space may be expanded.

According to an embodiment, the horizontal portion 512 of the spacer 910 may be bonded to the metal plate 801 at the coupling region 809. The spacer 910 formed of the metal material may be welded to the metal plate 801. For example, the spacer 910 and the metal plate 801 may include a steel use stainless (SUS) material.

According to the above-described embodiment, the spacer 910 may be bonded to the metal plate 801 formed of the same material. The spacer 910 may be integrally formed with the metal plate 801 to increase the coupling force. The spacer 910 may provide a space for expansion of the resonance space by separating the metal plate 801 and the planar portion 511 from each other. The electronic device 200 having the resonance space expanded to a space between the spacer 910 and the metal plate 801 may provide improved speaker performance.

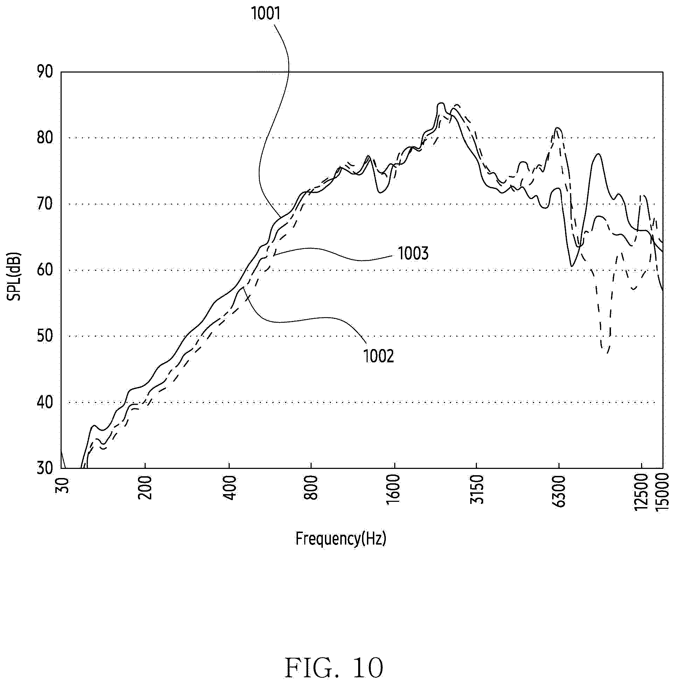

FIG. 10 is a graph illustrating a sound pressure level according to a volume of a resonance space of a speaker, according to an embodiment.

Referring to FIG. 10, the sound pressure level according to the resonance space of the speaker is illustrated.

The X-axis indicates the frequency of the audio signal, and the unit may be Hz. The Y-axis indicates the sound pressure level (SPL) of the audio signal, and the unit may be dB.

Graph 1001, i.e. the solid line, indicates the sound pressure level when the volume of the total resonance space of the speaker is 0.36 cc. Graph 1002, i.e. the alternating dashed line, indicates the sound pressure level when the volume of the total resonance space of the speaker is 0.26 cc. Graph 1003, i.e. the dashed line, indicates the sound pressure level when the volume of the total resonance space of the speaker is 0.23 cc.

The graph 1001 indicates the sound pressure level of the electronic device 200 according to an embodiment. For example, the resonance space may be expanded from the second space 502 between the speaker and the structure to the first space 503 between the planar portion of the spacer in contact with the speaker and the rear plate. The electronic device 200 having the expanded resonance space may have an increased sound pressure level in a low band (e.g., 100 Hz to 1000 Hz).

The graphs 1002 and 1003 may be examples in which only the second space 502 is used as the resonance space. Comparing the graphs 1002 and 1003 with the graph 1001, the sound pressure level may be relatively low in the low band. For example, at a frequency of 400 Hz, the graph 1001 indicating the electronic device having the expanded resonance space may have a sound pressure level of approximately 55 dB, and the electronic device using only the second space 502 as the resonance space may have a sound pressure level of approximately 50 dB.

According to the above-described embodiments, the electronic device may provide improved performance in a low-pitched sound band by providing the expanded resonance space.

According to the above-described embodiment, an electronic device (e.g., an electronic device 200 of FIG. 2) may comprise a housing (e.g., a housing 210 of FIG. 2) including a first surface (e.g., a first surface 200A of FIG. 2), a second surface (e.g., a second surface 200B of FIG. 2) opposite to the first surface, and a side surface (e.g., a third surface 200C of FIG. 2) between the first surface and the second surface. The housing may include a front plate (e.g., a front plate 202 of FIG. 2), and a rear plate (e.g., a rear plate 211 of FIG. 2). The electronic device may comprise a frame (e.g., a frame 240 of FIG. 2) disposed between the first surface and the second surface and forming the side surface. The frame may include an audio duct and disposed between the front plate and the rear plate. The electronic device 200 may comprise a speaker (e.g., a speaker 410 of FIG. 4a) including a surface (e.g., a surface 410a of FIG. 5) partially contacted on a portion of the frame and another surface (e.g., another surface 410b of FIG. 5) opposite to the surface. The speaker may include a diaphragm (e.g., a diaphragm 311 of FIG. 4b) facing the audio duct and a surface facing the rear plate. The speaker may be connected to the audio duct and disposed on the frame. The speaker may be configured to provide an audio signal to outside of the electronic device from the diaphragm through the audio duct. According to an embodiment, the electronic device may comprise a spacer (e.g., a spacer 510 of FIG. 5) disposed between the other surface and the second surface. The spacer may include a planar portion (e.g., a planar portion 511 of FIG. 5) disposed on the other surface of the speaker and spaced apart from the second surface, a horizontal portion (e.g., a horizontal portion 512 of FIG. 5) in contact with the second surface and spaced apart from the other surface of the speaker. The spacer may further include a connection portion (e.g., a connection portion 513 of FIG. 5). The connection portion may be disposed between the planar portion and the horizontal portion. According to an embodiment, when viewing the second surface from above, the planar portion may face the horizontal portion with the connection portion therebetween. According to an embodiment, a resonance space may include a first space (e.g., a first space 503 of FIG. 5) and a second space (e.g., a second space 502 of FIG. 5). The first space may be disposed between the second surface and the planar portion. According to an embodiment, the first space may be connected to the second space between the other surface and the horizontal portion for a resonance space for audio signal transmitted toward a speaker hole of the side surface through a through hole of the frame arranged with respect to the surface of the speaker, from the surface of the speaker.

According to the above-described embodiment, the electronic device may expand the resonance space from the second space to the first space. Based on the expansion of the resonance space, the speaker of the electronic device may provide improved performance in a low-pitched sound band. The expanded resonance space may provide a wide resonance space for resonance of an audio signal of the low-pitched sound band.

According to an embodiment, the horizontal portion may contact the connection portion and may extend from the connection portion in a direction away from the planar portion along the second surface.

According to the above-described embodiment, the first space between the planar portion of the spacer and the speaker may be formed by including the connection portion. The horizontal portion may increase the volume of the first space by being extended to the outside of the first space.

According to an embodiment, the housing may include a first plate forming the first surface and a second plate forming the second surface. The spacer may be fixed to the second plate.

According to an embodiment, a portion of the spacer may be disposed in a groove formed on an inner surface of the second plate toward the housing.

According to the above-described embodiment, the second plate may fix the spacer. As the electronic device is assembled, the second plate may press the speaker through the spacer. Through the pressurization, the speaker may be fixed at a designated position in the electronic device.

According to an embodiment, the second plate and the spacer may include a metal material. A portion of the spacer may be bonded to an inner surface of the second plate facing the housing.

According to the above-described embodiment, the second plate may fix the spacer. The second plate and the spacer may be formed of a metal material and bonded to each other. For example, the second plate may be welded at a coupling portion (e.g., a contact portion) with the space. The second plate and the spacer bonded to each other may press the speaker as the electronic device is assembled. The pressurized speaker may be fixed at a designated position within the housing.

According to an embodiment, the planar portion of the spacer may be interposed between the second surface of the housing and the speaker and may be configured to press the other surface of the speaker. The planar portion may be in contact with the other surface of the speaker.

According to an embodiment, the second surface of the housing, the spacer, and the frame may surround the second space.

According to the above-described embodiment, the spacer may provide an additional space for expansion of the resonance space by including a planar portion and a horizontal portion having a step from each other.

According to an embodiment, a bracket (e.g., bracket 430 of FIG. 4a) disposed in the housing and in contact with a portion of the housing forming the second surface may be further included. A portion of the spacer may be inserted into a groove of the bracket.

According to the above-described embodiment, the spacer may be fixed to an internal structure of the electronic device. The fixed spacer may press the speaker as the electronic device is assembled. The pressurized speaker may be fixed at a designated position inside the electronic device.

According to an embodiment, the electronic device may further comprise the metal plate disposed in the housing and in contact with a portion of the housing forming the second surface. According to an embodiment, the spacer may be bonded to the metal plate.

According to an embodiment, the housing may include a bracket disposed between the first surface and the second surface, and wherein a portion of the end of the metal plate may be fixed to the bracket by being inserted into the bracket.

By further including the metal plate, it is possible to increase the bonding force of the spacer. The metal plate may be fixed to the bracket in the housing, and the spacer bonded to the metal plate may press the speaker when assembling the electronic device. The pressurized speaker may be fixed at a designated position. The space between the metal plate and the spacer may provide an additional resonance space. The space between the metal plate and the spacer may improve the performance of the low-pitched sound band of the speaker.

According to an embodiment, the connection portion may include a plurality of connection portions, wherein each of the plurality of connection portions may be extended from each of edges of the planar portion to have a slope with respect to the planar portion and may be spaced apart from each other. According to an embodiment, a spaced gap of the plurality of connection portions may connect the first space and the second space.

According to an embodiment, a volume of the first space may be determined based on a length of the connection portion.

According to the above-described embodiment, the planar portion and the second surface of the spacer may be spaced apart from each other through the connection portion. The spaced space may be used as an additional resonance space. The length of the connection portion may be proportional to the volume of the additional resonance space.

According to an embodiment, the horizontal portion may surround a portion of an edge of the planar portion, when viewing the spacer in a direction from the second surface toward the first surface.

According to an embodiment, the spacer may include a core of the planar portion and the plurality of connection portions extending from some of edges of the core toward the second surface. According to an embodiment, the horizontal portion may be bent from each of the plurality of connection portions and may extend parallel to the second surface. The first space may be surrounded with the planar portion, the plurality of the connection portions, and a portion of the second surface, and wherein the second space may be surrounded with the horizontal portion, the plurality of the connection portions, another portion of the second surface and another surface of the speaker.

According to an embodiment, the connection portions may be spaced apart from each other, and wherein the first space may be connected to the second space through the gap between the connection portions.

According to the above-described embodiment, the spacer may provide an extension portion in order to increase a pressing force transmitted to the speaker. The spacer including the extension portion may increase the force transmitted to the speaker by increasing the contact area of the speaker. The connection portions may be spaced apart from each other to connect the first space to the second space, which is a resonance space.

According to an embodiment, the frame may include a seating groove in which the speaker is disposed, and the through hole may be connected to the speaker hole.

According to an embodiment, the electronic device (e.g., the electronic device 200 of FIG. 2), may comprise a housing (e.g., a housing 210 of FIG. 2) including a first plate (e.g., a front plate 202 of FIG. 2) forming a first surface (e.g., a first surface 200A of FIG. 2), a second plate (e.g., a rear plate 211 of FIG. 2) forming a second surface (e.g., a second surface 200B of FIG. 2) opposite to the first surface and a frame (e.g., a frame 240 of FIG. 2) disposed between the first surface and the second surface and forming a side surface (e.g., the third surface 200C of FIG. 2). The electronic device may comprise a speaker (e.g., a speaker 410 of FIG. 4a) including a surface (e.g., a surface 410a of FIG. 5) partially contacted on a portion of the frame and another surface (e.g., another surface 410b of FIG. 5) opposite to the surface. The electronic device may comprise a spacer (e.g., a spacer 510 of FIG. 5) disposed between the other surface and the second surface. The electronic device may comprise a metal plate (e.g., a metal plate 801 of FIG. 8) disposed on the spacer and in contact with the second plate. According to an embodiment, the spacer may include a planar portion (e.g., a planar portion 511 of FIG. 8) in contact with the other surface of the speaker and spaced apart from the metal plate, a horizontal portion (e.g., the horizontal portion 512 of FIG. 8) in contact with the metal plate and spaced apart from the other surface the speaker (410). The spacer may include a connection portion (e.g., a connection portion 513 of FIG. 8) between the planar portion and the horizontal portion. According to an embodiment, when viewing the second surface from above, the planar portion may face the horizontal portion with the connection portion therebetween. A resonance space may connect a first space (e.g., a first space 803 of FIG. 8) between the second surface and the planar portion and a second space (e.g., a second space 802 of FIG. 8) between the other surface and the horizontal portion. The first space may be connected to the second space for a resonance space for audio signal transmitted toward a speaker hole of the side surface through a through hole of the frame arranged with respect to the surface of the speaker, from the surface of the speaker.

According to the above-described embodiment, the electronic device may expand the resonance space from the second space to the first space. Based on the expansion of the resonance space, the speaker of the electronic device may provide improved performance in a low-pitched sound band. The expanded resonance space may provide a wide resonance space for resonance of an audio signal of the low-pitched sound band.

According to an embodiment, the housing may include a bracket disposed between the first surface and the second surface, and wherein a portion of the end of the metal plate may be fixed to the bracket by being inserted into the bracket.

By further including the metal plate, it is possible to increase the bonding force of the spacer. The metal plate may be fixed to the bracket in the housing, and the spacer bonded to the metal plate may press the speaker when assembling the electronic device. The pressurized speaker may be fixed at a designated position. The space between the metal plate and the spacer may provide an additional resonance space. The space between the metal plate and the spacer may improve the performance of the low-pitched sound band of the speaker.

According to an embodiment, the connection portion may include a plurality of connection portions, wherein each of the plurality of connection portions may be extended from each of edges of the planar portion to have a slope with respect to the planar portion and may be spaced apart from each other. According to an embodiment, a spaced gap of the plurality of connection portions may connect the first space and the second space.

According to an embodiment, a volume of the first space may be determined based on a length of the connection portion.

According to the above-described embodiment, the planar portion and the second surface of the spacer may be spaced apart from each other through the connection portion. The spaced space may be used as an additional resonance space. The length of the connection portion may be proportional to the volume of the additional resonance space.

The electronic device according to various embodiments disclosed in the present document may be various types of devices. The electronic device may include, for example, a portable communication device (e.g., a smartphone), a computer device, a portable multimedia device, a portable medical device, a camera, a wearable device, or a home appliance. The electronic device according to an embodiment of the present document is not limited to the above-described devices.

With respect to the description of the drawings, similar reference numerals may be used for similar or related components. The singular form of the noun corresponding to the item may include one or more of the items unless clearly indicated differently in a related context. In this document, each of the phrases such as "A or B", "at least one of A and B", "at least one of A, B and C", "at least one of A, B, or C", and "at least one of A, B, or C" may include any one of the phrases together, or all possible combinations thereof. Terms such as "first", "second", or "second", or "second" may be used simply to distinguish a corresponding component from another corresponding component, and are not limited to other aspects (e.g., importance or order). When some (e.g., the first) component is referred to as "coupled" or "connected" in another (e.g., the second) component, with or without the term "functional" or "communicatively", it means that some of the components can be connected directly (e.g., wired), wirelessly, or through a third component.

The term "module" used in various embodiments of the present document may include a unit implemented in hardware, software, or firmware and be used interchangeably with terms such as logic, logic block, component, or circuitry, for example. The module may be a minimum unit or a part of the integrally configured component or the component that performs one or more functions. For example, according to an embodiment, the module may be implemented in the form of an application-specific integrated circuit (ASIC).

## Claims

1. An electronic device (200) comprising:
a housing (210) including a front plate (202), a rear plate (211), and a frame (240) disposed between the front plate (202) and the rear plate (211), the frame (240) including an acoustic duct (501);
a speaker (410) disposed on the frame and including a diaphragm facing the acoustic duct (501) and a surface facing the rear plate (211), wherein an audio output from the diaphragm reaches outside of the electronic device (200) through the acoustic duct (501);
a bracket (430) disposed between the rear plate (211) and the speaker (410); and
a spacer (510; 710a; 710b; 810) disposed between the surface of the speaker (410) and the bracket (430); **characterized by**:
the spacer (510; 710a; 710b; 810) including a planar portion (511) to contact on the surface of the speaker (410) and stepped portions extending from the planar portion (511) to the bracket (430);
wherein the stepped portions include horizontal portions (512) and connection portions (513) supporting the bracket (430),
wherein the horizontal portions (512) are disposed outside of the planar portion (511) when viewing the planar portion (511) of the spacer (510; 710a; 710b; 810) in a direction vertical to the planar portion,
wherein each of the connection portions (513) is extended from the planar portion (511) to a corresponding one of the horizontal portions (512), and
wherein the connection portions (513) are separated from each other to provide, as a resonance space, an inner space (503) of the spacer(510; 710a; 710b; 810).

2. The electronic device (200) according to claim 1, wherein each of the connection portions (513) is disposed between an outer space of the spacer (510; 710a; 710b; 810) and the inner space.

3. The electronic device (200) according to claim 1 or 2, wherein the planar portion (511) faces the rear plate (211) in a first direction,
wherein the horizontal portions (512) are spaced apart from the surface of the speaker (410) and face the speaker (410) in a second direction opposite to the first direction, and
wherein the connection portions (513) extend in a third direction different from the first direction and the second direction.

4. The electronic device (200) according to any one of claims 1 to 3, wherein the spacer (510; 710a; 710b; 810) is fixed to the bracket (430), and
wherein a part of the spacer (510; 710a; 710b; 810) is disposed in a groove formed on the bracket (430).

5. The electronic device (200) according to any one of claims 1 to 4, wherein the bracket (430) and the spacer (510; 710a; 710b; 810) include a metal material, and
wherein a part of the spacer (510; 710a; 710b; 810) is bonded to the bracket (430).

6. The electronic device (200) according to any one of claims 1 to 5, wherein the planar portion (511) is configured to press the surface of the speaker (410) based on the spacer (510; 710a; 710b; 810) pressurized on the bracket (430).

7. The electronic device (200) according to any one of claims 1 to 6, wherein the inner space (503) is partially surrounded by the bracket (430) and the spacer (510; 710a; 710b; 810).

8. The electronic device (200) according to any one of claims 1 to 7, further comprising a sealing member disposed between the frame (240) and the bracket (430).

9. The electronic device (200) according to any one of claims 1 to 8, further comprising the metal plate (801) disposed in the housing (210) and in contact with the bracket (430),
wherein the spacer (510; 710a; 710b; 810) is bonded to the metal plate (801).

10. The electronic device (200) according to claim 9,
wherein an end portion of the metal plate (801) is fixed to the bracket (430) by being inserted in the bracket (430).

11. The electronic device (200) according to any one of claims 1 to 10,
wherein a volume of the inner space (503) is determined based on a distance between the planar portion (511) and the horizontal portion (512).

12. The electronic device (200) according to any one of claims 1 to 11, wherein the resonance space is isolated from a space in the housing (210) by a sealing member disposed between the frame (240) and the bracket (430).

13. The electronic device (200) according to any one of claims 1 to 12,
wherein the planar portion (511) includes a core and extension parts extending from an edge of the core,
wherein each of the connection portions (513) is extended from each of the extension parts to the bracket (430), and
wherein each of the horizontal portions (512) is bent from each of the connection portions and extends parallel to the bracket (430).

14. The electronic device (200) according to any one of claims 1 to 13,
wherein the inner space (503) is surrounded with the planar portion (511), the connection portions (513), and a part of the bracket (430), and
wherein an outer space (502) is surrounded with the horizontal portion (512), the connection portions (513), another part of the bracket (430) and the surface of the speaker (410).

15. The electronic device (200) according to any one of claims 1 to 14, wherein the frame (240) includes a speaker hole facing the outside of the electronic device and a seating groove in which the speaker (410) is disposed, and
wherein the acoustic duct is extended from the seating groove to the speaker hole.

## Patentansprüche

1. Elektronische Vorrichtung (200), umfassend:
ein Gehäuse (210), das eine Frontplatte (202), eine Rückplatte (211) und einen Rahmen (240) enthält, der zwischen der Frontplatte (202) und der Rückplatte (211) angeordnet ist, wobei der Rahmen (240) einen akustischen Kanal (501) enthält;
einen Lautsprecher (410), der an dem Rahmen angeordnet ist und eine Membran, die dem akustischen Kanal (501) zugewandt ist, und eine Fläche beinhaltet, die der Rückplatte (211) zugewandt ist, wobei eine Audioausgabe von der Membran das Äußere der elektronischen Vorrichtung (200) durch den akustischen Kanal (501) erreicht;
eine Halterung (430), die zwischen der Rückplatte (211) und dem Lautsprecher (410) angeordnet ist; und
einen Abstandshalter (510; 710a; 710b; 810), der zwischen der Fläche des Lautsprechers (410) und der Halterung (430) angeordnet ist; **dadurch gekennzeichnet, dass**:
der Abstandshalter (510; 710a; 710b; 810) einen ebenen Abschnitt (511) zum Berühren der Fläche des Lautsprechers (410) und gestufte Abschnitte beinhaltet, die sich von dem ebenen Abschnitt (511) zu der Halterung (430) erstrecken;
wobei die gestuften Abschnitte horizontale Abschnitte (512) und Verbindungsabschnitte (513) beinhalten, die die Halterung (430) tragen,
wobei die horizontalen Abschnitte (512) außerhalb des ebenen Abschnitts (511) angeordnet sind, wenn der ebene Abschnitt (511) des Abstandshalters (510; 710a; 710b; 810) in einer Richtung senkrecht zu dem ebenen Abschnitt betrachtet wird,
wobei sich jeder der Verbindungsabschnitte (513) von dem ebenen Abschnitt (511) zu einem entsprechenden der horizontalen Abschnitte (512) erstreckt, und
wobei die Verbindungsabschnitte (513) voneinander getrennt sind, um als Resonanzraum einen Innenraum (503) des Abstandshalters (510; 710a; 710b; 810) bereitzustellen.

2. Elektronische Vorrichtung (200) nach Anspruch 1, wobei jeder der Verbindungsabschnitte (513) zwischen einem Außenraum des Abstandshalters (510; 710a; 710b; 810) und dem Innenraum angeordnet ist.

3. Elektronische Vorrichtung (200) nach Anspruch 1 oder 2, wobei der ebene Abschnitt (511) der Rückplatte (211) in eine erste Richtung weist,
wobei die horizontalen Abschnitte (512) von der Fläche des Lautsprechers (410) beabstandet sind und dem Lautsprecher (410) in einer zweiten Richtung entgegengesetzt zu der ersten Richtung zugewandt sind, und
wobei sich die Verbindungsabschnitte (513) in eine dritte Richtung erstrecken, die sich von der ersten Richtung und der zweiten Richtung unterscheidet.

4. Elektronische Vorrichtung (200) nach einem der Ansprüche 1 bis 3, wobei der Abstandshalter (510; 710a; 710b; 810) an der Halterung (430) befestigt ist, und
wobei ein Teil des Abstandshalters (510; 710a; 710b; 810) in einer an der Halterung (430) ausgebildeten Nut angeordnet ist.

5. Elektronische Vorrichtung (200) nach einem der Ansprüche 1 bis 4, wobei die Halterung (430) und der Abstandshalter (510; 710a; 710b; 810) ein Metallmaterial beinhalten, und
wobei ein Teil des Abstandshalters (510; 710a; 710b; 810) mit der Halterung (430) verklebt ist.

6. Elektronische Vorrichtung (200) nach einem der Ansprüche 1 bis 5, wobei der ebene Abschnitt (511) konfiguriert ist, um die Fläche des Lautsprechers (410) basierend darauf, dass Druck auf den Abstandshalter (510; 710a; 710b; 810) ausgeübt wird, auf die Halterung (430) zu drücken.

7. Elektronische Vorrichtung (200) nach einem der Ansprüche 1 bis 6, wobei der Innenraum (503) teilweise von der Halterung (430) und dem Abstandshalter (510; 710a; 710b; 810) umgeben ist.

8. Elektronische Vorrichtung (200) nach einem der Ansprüche 1 bis 7, ferner umfassend ein Dichtungselement, das zwischen dem Rahmen (240) und der Halterung (430) angeordnet ist.

9. Elektronische Vorrichtung (200) nach einem der Ansprüche 1 bis 8, ferner umfassend die Metallplatte (801), die im Gehäuse (210) angeordnet ist und die Halterung (430) berührt,
wobei der Abstandshalter (510; 710a; 710b; 810) mit der Metallplatte (801) verklebt ist.

10. Elektronische Vorrichtung (200) nach Anspruch 9,
wobei ein Endabschnitt der Metallplatte (801) an der Halterung (430) befestigt ist, indem er in die Halterung (430) eingesetzt ist.

11. Elektronische Vorrichtung (200) nach einem der Ansprüche 1 bis 10,
wobei ein Volumen des Innenraums (503) basierend auf einem Abstand zwischen dem ebenen Abschnitt (511) und dem horizontalen Abschnitt (512) bestimmt ist.

12. Elektronische Vorrichtung (200) nach einem der Ansprüche 1 bis 11, wobei der Resonanzraum von einem Raum im Gehäuse (210) durch ein Dichtungselement isoliert ist, das zwischen dem Rahmen (240) und der Halterung (430) angeordnet ist.

13. Elektronische Vorrichtung (200) nach einem der Ansprüche 1 bis 12,
wobei der ebene Abschnitt (511) einen Kern und Verlängerungsteile beinhaltet, die sich von einem Rand des Kerns aus erstrecken,
wobei sich jeder der Verbindungsabschnitte (513) von jedem der Verlängerungsteile zu der Halterung (430) erstreckt, und
wobei jeder der horizontalen Abschnitte (512) von jedem der Verbindungsabschnitte gebogen ist und sich parallel zu der Halterung (430) erstreckt.

14. Elektronische Vorrichtung (200) nach einem der Ansprüche 1 bis 13,
wobei der Innenraum (503) von dem ebenen Abschnitt (511), den Verbindungsabschnitten (513) und einem Teil der Halterung (430) umgeben ist, und
wobei ein Außenraum (502) von dem horizontalen Abschnitt (512), den Verbindungsabschnitten (513), einem anderen Teil der Halterung (430) und der Fläche des Lautsprechers (410) umgeben ist.

15. Elektronische Vorrichtung (200) nach einem der Ansprüche 1 bis 14, wobei der Rahmen (240) ein Lautsprecherloch, das dem Äußeren der elektronischen Vorrichtung zugewandt ist, und eine Aufnahmenut beinhaltet, worin der Lautsprecher (410) angeordnet ist, und
wobei sich der akustische Kanal von der Aufnahmenut zu dem Lautsprecherloch erstreckt.

## Revendications

1. Dispositif électronique (200), comprenant :
un boîtier (210) comprenant une plaque frontale (202), une plaque arrière (211), et un cadre (240) disposé entre la plaque frontale (202) et la plaque arrière (211), le cadre (240) comprenant un conduit acoustique (501) ;
un haut-parleur (410) disposé sur le cadre et comprenant un diaphragme faisant face au conduit acoustique (501) et une surface faisant face à la plaque arrière (211), dans lequel une sortie audio du diaphragme atteint l'extérieur du dispositif électronique (200) à travers le conduit acoustique (501) ;
un support (430) disposé entre la plaque arrière (211) et le haut-parleur (410) ; et
une entretoise (510 ; 710a ; 710b ; 810) disposée entre la surface du haut-parleur (410) et le support (430) ; **caractérisé en ce que** :
l'entretoise (510 ; 710a ; 710b ; 810) comprend une partie plane (511) destinée à entrer en contact avec la surface du haut-parleur (410) et des parties étagées s'étendant de la partie plane (511) au support (430) ;
dans lequel les parties étagées comprennent des parties horizontales (512) et des parties de connexion (513) supportant le support (430),
dans lequel les parties horizontales (512) sont disposées à l'extérieur de la partie plane (511) lorsqu'on regarde la partie plane (511) de l'entretoise (510 ; 710a ; 710b ; 810) dans une direction verticale par rapport à la partie plane,
dans lequel chacune des parties de connexion (513) s'étend de la partie plane (511) à une partie horizontale correspondante (512), et
dans lequel les parties de connexion (513) sont séparées les unes des autres pour fournir, en tant qu'espace de résonance, un espace intérieur (503) de l'entretoise (510 ; 710a ; 710b ; 810).

2. Dispositif électronique (200) selon la revendication 1, dans lequel chacune des parties de connexion (513) est disposée entre un espace extérieur de l'entretoise (510 ; 710a ; 710b ; 810) et l'espace intérieur.

3. Dispositif électronique (200) selon la revendication 1 ou 2, dans lequel la partie plane (511) fait face à la plaque arrière (211) dans une première direction,
dans lequel les parties horizontales (512) sont espacées de la surface du haut-parleur (410) et font face au haut-parleur (410) dans une deuxième direction opposée à la première direction, et
dans lequel les parties de connexion (513) s'étendent dans une troisième direction différente de la première direction et de la deuxième direction.

4. Dispositif électronique (200) selon l'une quelconque des revendications 1 à 3, dans lequel l'entretoise (510 ; 710a ; 710b ; 810) est fixée au support (430), et
dans lequel une partie de l'entretoise (510 ; 710a ; 710b ; 810) est disposée dans une rainure formée sur le support (430).

5. Dispositif électronique (200) selon l'une quelconque des revendications 1 à 4, dans lequel le support (430) et l'entretoise (510 ; 710a ; 710b ; 810) comprennent un matériau métallique, et
dans lequel une partie de l'entretoise (510 ; 710a ; 710b ; 810) est collée au support (430).

6. Dispositif électronique (200) selon l'une quelconque des revendications 1 à 5, dans lequel la partie plane (511) est configurée pour presser la surface du haut-parleur (410) en se basant sur l'entretoise (510 ; 710a ; 710b ; 810) étant pressurisée sur le support (430).

7. Dispositif électronique (200) selon l'une quelconque des revendications 1 à 6, dans lequel l'espace intérieur (503) est partiellement entouré par le support (430) et l'entretoise (510 ; 710a ; 710b ; 810).

8. Dispositif électronique (200) selon l'une quelconque des revendications 1 à 7, comprenant en outre un élément d'étanchéité disposé entre le cadre (240) et le support (430).

9. Dispositif électronique (200) selon l'une quelconque des revendications 1 à 8, comprenant en outre la plaque métallique (801) disposée dans le boîtier (210) et en contact avec le support (430),
dans lequel l'entretoise (510 ; 710a ; 710b ; 810) est collée à la plaque métallique (801).

10. Dispositif électronique (200) selon la revendication 9,
dans lequel une partie d'extrémité de la plaque métallique (801) est fixée au support (430) en étant insérée dans le support (430).

11. Dispositif électronique (200) selon l'une quelconque des revendications 1 à 10,
dans lequel un volume de l'espace intérieur (503) est déterminé en se basant sur une distance entre la partie plane (511) et la partie horizontale (512).

12. Dispositif électronique (200) selon l'une quelconque des revendications 1 à 11, dans lequel l'espace de résonance est isolé d'un espace du boîtier (210) par un élément d'étanchéité disposé entre le cadre (240) et le support (430).

13. Dispositif électronique (200) selon l'une quelconque des revendications 1 à 12,
dans lequel la partie plane (511) comprend un noyau et des parties d'extension s'étendant à partir d'un bord du noyau,
dans lequel chacune des parties de connexion (513) s'étend de chacune des parties d'extension au support (430), et
dans lequel chacune des parties horizontales (512) est courbée à partir de chacune des parties de connexion et s'étend parallèlement au support (430).

14. Dispositif électronique (200) selon l'une quelconque des revendications 1 à 13,
dans lequel l'espace intérieur (503) est entouré de la partie plane (511), des parties de connexion (513) et d'une partie du support (430), et
dans lequel un espace extérieur (502) est entouré de la partie horizontale (512), des parties de connexion (513), d'une autre partie du support (430) et de la surface du haut-parleur (410).

15. Dispositif électronique (200) selon l'une quelconque des revendications 1 à 14, dans lequel le cadre (240) comprend un trou de haut-parleur faisant face à l'extérieur du dispositif électronique et une rainure d'assise dans laquelle est disposé le haut-parleur (410), et
dans lequel le conduit acoustique s'étend de la rainure d'assise au trou du haut-parleur.
